# EUROPÄISCHE PATENTSCHRIFT

(11) **EP 3 476 193 B1**
(45) Veröffentlichungstag und Bekanntmachung des Hinweises auf die Patenterteilung: **25.11.2020**
(21) Anmeldenummer: 18401083.3
(22) Anmeldetag: 16.10.2018
(51) Int. Cl.: A01C 17/00

(54) **STREUGERÄT ZUM AUSBRINGEN VON STREUGUT**
SPREADING MACHINE FOR DISTRIBUTING SPREADING MATERIAL
APPAREIL D'ÉPANDAGE DESTINÉ À L'ÉPANDAGE D'UN PRODUIT D'ÉPANDAGE

(30) Priorität: 27.10.2017 DE 102017125202
(43) Veröffentlichungstag der Anmeldung: 01.05.2019
(73) Patentinhaber: Amazonen-Werke H. Dreyer GmbH & Co. KG, 49205 Hasbergen (DE)
(72) Erfinder: Resch, Rainer, 49170 Hagen a TW (DE); Rahe, Florian, 49504 Lotte (DE)

(56) Entgegenhaltungen:
- EP-A2- 0 127 922
- EP-A2- 1 074 174
- EP-A2- 3 300 570
- DE-A1- 3 924 330
- DE-B- 1 180 562
- US-A- 3 995 569

## Beschreibung

Die Erfindung betrifft ein Streugerät zum Ausbringen von Streugut nach dem Oberbegriff des Patentanspruchs 1 und ein Verfahren zum Verändern eines Streubildes eines Streugeräts nach Patentanspruch 12.

Beim Ausbringen von Streugut, wie beispielsweise Dünger, ist stets eine gleichmäßige Streugutverteilung anzustreben. Insbesondere an Feldgrenzen oder im Bereich des Vorgewendes ist dabei regelmäßig eine Anpassung des Streubildes des Streugeräts notwendig, damit Fehlausbringungen und Ungleichmäßigkeiten vermieden werden.

Zur Anpassung des Streubildes ist es beispielsweise bekannt, den Aufgabepunkt des Streuguts auf die Schleuderscheibe, die Drehzahl der Schleuderscheibe, den Abwurfwinkel des Streuguts und/oder die Abwurfweite des Streuguts zu verändern. Dies bedingt üblicherweise eine aufwändige Verstellung unterschiedlicher mechanischer Komponenten des Streuwerks des Streugeräts. Aus den Druckschriften DE 38 04 412 A1 und DE 41 09 417 A1 ist es außerdem bekannt, die Neigung der Schleuderscheiben zur Beeinflussung des Streubildes des Streugeräts zu verstellen.

Außerdem wird in der Druckschrift DE 39 24 330 A1 ein Streuer beschrieben, welcher zum Erledigen verschiedener Streuaufgaben gegenüber dem Erdboden geneigt werden kann.

Eine andere Einrichtung zur Veränderung des Streubildes des Streugerätes, bei der das Streubild durch eine Verschwenkung des Streuwerkes veränderbar ist, ist beispielsweise aus der Druckschrift US 3 995 569 A bekannt, die den Oberbegriff des Anspruchs 1 offenbart.

Diese und andere bekannte Lösungen führen jedoch entweder nicht zu einem zufriedenstellenden Ausbringergebnis oder bedingen eine aufwendige Verstellmechanik, deren Konstruktion, Herstellung und Inbetriebnahme zeit- und kostenaufwendig ist. Darüber hinaus eignen sich die bekannten Lösungen nur bedingt zur Ausbringung von Streugut während einer Kurvenfahrt des Streugeräts.

Die der Erfindung zugrunde liegende Aufgabe besteht somit darin, die Streubildanpassung eines Streugeräts, insbesondere während einer Kurvenfahrt, zu verbessern und/oder zu vereinfachen.

Die Aufgabe wird erfindungsgemäß durch die kennzeichnenden Merkmale des Anspruchs 1 gelöst.

Die Erfindung macht sich die Erkenntnis zunutze, dass durch eine Verschwenkung des gesamten Streuwerkes, welches zumindest einen Behälter zum Bevorraten des Streuguts, zumindest eine rotierend antreibbare Schleuderscheibe zum Auswerfen des Streuguts und zumindest eine Aufgabeeinrichtung zum Aufgeben des Streuguts auf die zumindest eine Schleuderscheibe umfasst, auf eine überraschend einfache Weise eine Streubildveränderung umgesetzt werden kann, ohne dass hierfür eine komplexe und aufwendig zu steuernde Verstellmechanik notwendig ist. Die Veränderung des Streubildes kann dabei beispielsweise das Drehen eines Streufächers des Streugeräts umfassen.

Die Aufgabeeinrichtung umfasst vorzugsweise eine verstellbare Dosieröffnung, mittels welcher der Aufgabepunkt des Streuguts auf die zumindest eine Schleuderscheibe verändert werden kann. Der Behälter ist vorzugsweise als Vorratsbehälter ausgebildet, welcher von einem Tragrahmen des Streugeräts getragen wird. Vorzugsweise ist das Streugerät als Zentrifugaldüngerstreuer ausgebildet und umfasst zwei nebeneinander angeordnete und rotierend antreibbare Schleuderscheiben. In diesem Fall kann der Vorratsbehälter in seinem unteren Bereich zwei Streukammern aufweisen, wobei das Streugut aus der ersten Streukammer über eine erste Aufgabeeinrichtung einer ersten Schleuderscheibe und das Streugut aus der zweiten Streukammer über eine zweite Aufgabeeinrichtung einer zweiten Schleuderscheibe zugeführt wird. Das Streugerät kann dazu eingerichtet sein, von einem Fahrzeug, wie etwa einem Traktor, getragen zu werden. Alternativ kann das Streugerät dazu eingerichtet sein, von einem Fahrzeug, wie etwa einem Traktor, gezogen zu werden. Insbesondere umfasst das Streuwerk zumindest ein Dosierorgan, welches dazu eingerichtet ist, die auf die zumindest eine Schleuderscheibe aufzugebende Streugutmenge zu dosieren. Ferner kann die zumindest eine Aufgabeeinrichtung als Bestandteil des zumindest einen Dosierorgans ausgebildet sein.

In einer nicht erfindungsgemäßen Ausführungsform eines Streugeräts ist die Verstelleinrichtung dazu eingerichtet, das gesamte Streugerät zur Veränderung des Streubildes des Streugeräts zu verschwenken. Dadurch, dass das gesamte Streugerät zur Veränderung des Streubildes des Streugeräts verschwenkt wird, kann eine wesentlich einfachere Verstellmechanik im Streuwerk selbst eingesetzt werden. Die Verschwenkung des gesamten Streugeräts bietet sich beispielsweise besonders bei der Anpassung des Streubildes des Streugeräts während des Ausführens einer Kurvenfahrt an, da der Streufächer des Streugeräts durch ein Verschwenken des gesamten Streugeräts vergleichsweise präzise dem Kurvenverlauf angepasst werden kann.

Erfindungsgemäß ist vorgesehen, dass die Verstelleinrichtung dazu eingerichtet ist, das Streuwerk derart zu verschwenken, dass die Mitte des Streubildes während des Schwenkvorgangs im Wesentlichen auf der Mitte der Fahrgasse verbleibt. Die Mitte des Streubildes ist vorzugsweise der Mittelpunkt des Streufächers des Streugeräts. Unter der Mitte der Fahrgasse ist die Mitte in Bezug auf die laterale Ausdehnung der Fahrgasse zu verstehen. Insbesondere umfasst die Fahrgasse zwei nebeneinander und im Wesentlichen parallel zueinander verlaufende Fahrspuren, wobei die Mitte der Fahrgasse zwischen den Fahrspuren positioniert ist. Alternativ oder zusätzlich kann die Verstelleinrichtung des Streugeräts dazu eingerichtet sein, das Streuwerk derart zu verschwenken, dass die Mitte des Streubildes nicht auf der Mitte der Fahrgasse verbleibt, sondern seitlich aus der Mitte der Fahrgasse ausgelenkt wird. Ein derartiges seitliches Verschwenken aus der Mitte der Fahrgasse heraus ist beispielsweise beim Grenz-, Rand- und Keilstreuen vorteilhaft.

In einer weiteren bevorzugten Ausführungsform umfasst das erfindungsgemäße Streugerät eine Steuerungseinrichtung, welche dazu eingerichtet ist, die Verstelleinrichtung zum Verschwenken des Streuwerks bei einer Kurvenfahrt des Streugeräts zu betätigen. Vorzugsweise ist das Streugerät dazu eingerichtet, das Ausführen einer Kurvenfahrt durch das Streugerät und/oder ein das Streugerät tragendes oder ziehendes Fahrzeug zu erfassen. Vorzugsweise ist die Steuerungseinrichtung dazu eingerichtet, selbsttätig ein von dem Kurvenradius und/oder der Fahrgeschwindigkeit abhängigen Schwenkvorgang des Streuwerks zu veranlassen. Beispielsweise umfasst die Steuerungseinrichtung einen Speicher, in welchem ein Verstellzusammenhang zwischen dem einzustellenden Schwenkwinkel des Streuwerks und dem Kurvenradius und/oder der Fahrgeschwindigkeit gespeichert ist.

In einer anderen Ausführungsform des erfindungsgemäßen Streugeräts ist die Steuerungseinrichtung dazu eingerichtet, den aktuellen Schwenkwinkel des Streuwerks und/oder den am Streuwerk einzustellenden Schwenkwinkel in Abhängigkeit einer gefahrenen Fahrspur zu bestimmen. Vorzugsweise weist das Streugerät eine Einrichtung zur Erfassung, insbesondere zur Aufzeichnung, der gefahrenen Fahrspur auf. Die Einrichtung zur Erfassung der gefahrenen Fahrspur kann beispielsweise kamerabasiert sein und/oder Positionsdaten des Streugeräts und/oder Bewegungsdaten, wie etwa Längs- und/oder Querbeschleunigungsdaten, des Streugeräts bei der Erfassung der Fahrspur berücksichtigen.

In einer weiteren Ausführungsform des erfindungsgemäßen Streugeräts ist die Steuerungseinrichtung dazu eingerichtet, den aktuellen Schwenkwinkel des Streuwerks und/oder den am Streuwerk einzustellenden Schwenkwinkel in Abhängigkeit von Streubildeigenschaften und/oder Geräteeinstellungen des Streugeräts zu berechnen. Die Streubildeigenschaften und/oder die Geräteeinstellungen können dabei manuell eingegeben, selbsttätig von dem Streugerät erfasst, durch das Streugerät gemessen und/oder auf einem Speicher des Streugeräts gespeichert sein. Die Streubildeigenschaften umfassen beispielsweise die Wurfweite und/oder die Wurfrichtung. Die Geräteeinstellungen betreffen beispielsweise die Konfiguration, den Typ und/oder die eingestellte oder aktuelle Drehzahl der einen oder der mehreren Schleuderscheiben des Streugeräts.

In einer Weiterbildung des erfindungsgemäßen Streugeräts ist die Verstelleinrichtung derart ausgebildet, dass beim Verschwenken des Streuwerks die Relativposition des zumindest einen Behälters, der zumindest einen Schleuderscheibe und der zumindest einen Aufgabeeinrichtung unverändert bleibt. Dies kann besonders einfach dadurch erreicht werden, indem ein Tragrahmen, an welchem der zumindest eine Behälter, die zumindest eine Schleuderscheibe und die zumindest eine Aufgabeeinrichtung befestigt sind, durch die Verstelleinrichtung verschwenkt wird. Insbesondere ist die Verstelleinrichtung dazu eingerichtet, das Streuwerk in mehrere, insbesondere in zumindest drei, fünf, zehn, fünfzehn, zwanzig oder fünfundzwanzig unterschiedliche Ausrichtungen zu verbringen. Die Verstelleinrichtung kann beispielsweise mehrstufig oder stufenlos einstellbar sein.

Das erfindungsgemäße Streugerät wird ferner dadurch vorteilhaft weitergebildet, dass die Verstelleinrichtung dazu eingerichtet ist, das Streuwerk um eine im Wesentlichen horizontale und quer zur Fahrtrichtung verlaufende Schwenkachse zu verschwenken. Durch eine Verschwenkung des Streuwerks um eine im Wesentlichen horizontale und quer zur Fahrtrichtung verlaufende Schwenkachse kann der Wurfbogen des Streuguts beeinflusst werden, wodurch letztendlich die Wurfweite und auch die Streufächerform verändert werden. Neben der Drehzahlveränderung, der Veränderung des Aufgabepunkts des Streuguts auf die Schleuderscheibe und/oder einer Verstellung von auf der Schleuderscheibe angeordneten Wurfschaufeln kann durch das Verschwenken des Streuwerks um eine im Wesentlichen horizontal und quer zur Fahrtrichtung verlaufende Schwenkachse das Streubild des Streugeräts weiter angepasst werden, sodass bei bestimmten Feldgeometrien die Gleichmäßigkeit der Ausbringung des Streuguts gesteigert wird.

In einer besonders bevorzugten Ausführungsform des erfindungsgemäßen Streugeräts ist die Verstelleinrichtung dazu eingerichtet, das Streuwerk um eine aufrechte und/oder im Wesentlichen vertikale Schwenkachse zu verschwenken. Durch das Verschwenken des Streuwerks um eine aufrechte und/oder im Wesentlichen vertikale Schwenkachse kommt es zu einer Drehung des Streufächers des Streugeräts. Beispielsweise kann der Streufächer des Streugeräts im Uhrzeigersinn oder entgegen dem Uhrzeigersinn durch ein Verschwenken des Streuwerks um eine aufrechte und/oder im Wesentlichen vertikale Schwenkachse gedreht werden. Somit kann das Streubild des Streugeräts sowohl an Linkskurven als auch an Rechtskurven des Streugeräts angepasst werden.

Zusätzlich kann die Verstelleinrichtung des Streugeräts dazu eingerichtet sein, das Streuwerk zur Veränderung des Streubildes seitlich, insbesondere quer zur Fahrtrichtung, zu verschieben, anzuheben und/oder abzusenken und/oder in Fahrtrichtung oder entgegen der Fahrtrichtung zu verfahren. Durch eine seitliche Verschiebung des Streuwerks kann der Streufächer des Streugeräts seitlich, insbesondere quer zur Fahrtrichtung, verschoben werden. Die seitliche Verschiebung des Streuwerks führt vorzugsweise zu einer Linearbewegung des Streuwerks nach außen. Durch ein Anheben und/oder Absenken des Streuwerks wird die Fallhöhe des ausgeworfenen Streuguts beeinflusst, wodurch sich eine Veränderung des Streubildes ergibt. Durch ein Verfahren des Streuwerks in Fahrtrichtung oder entgegen der Fahrtrichtung wird der Streufächer des Streugeräts ebenfalls in Fahrtrichtung oder entgegen der Fahrtrichtung verschoben, wodurch in einigen Situationen die Gleichmäßigkeit der Streugutausbringung gesteigert werden kann.

In einer anderen bevorzugten Ausführungsform des erfindungsgemäßen Streugeräts umfasst die Verstelleinrichtung einen verstellbaren Zwischenrahmen, mittels welchem die Ausrichtung des Streuwerks gegenüber einem oder mehreren Kopplungspunkten einer Kuppeleinrichtung des Streugeräts veränderbar ist. Vorzugsweise ist der Zwischenrahmen mit einem Tragrahmen verbunden, an welchem das Streuwerk des Streugeräts teilweise oder vollständig befestigt ist. Vorzugsweise ist der zumindest eine Behälter, die zumindest eine Schleuderscheibe und die zumindest eine Aufgabeeinrichtung an dem Tragrahmen befestigt. Insbesondere ist die Kuppeleinrichtung dazu eingerichtet, das Streugerät an dem einen oder den mehreren Kopplungspunkten mit einem das Streugerät tragenden Fahrzeug mechanisch zu koppeln. Vorzugsweise ist die Kuppeleinrichtung des Streugeräts dazu eingerichtet, mit einem Dreipunkt-Kraftheber gekoppelt zu werden.

Ferner ist ein erfindungsgemäßes Streugerät bevorzugt, bei welchem die Kuppeleinrichtung ein Bestandteil der Verstelleinrichtung ist. Vorzugsweise ist die Kuppeleinrichtung an dem verstellbaren Zwischenrahmen der Verstelleinrichtung angeordnet oder in den verstellbaren Zwischenrahmen integriert. Dadurch, dass die Kuppeleinrichtung als Bestandteil der Verstelleinrichtung ausgebildet ist, können Streugeräte mit nicht-schwenkbarem Streuwerk besonders einfach und kostengünstig nachgerüstet werden. Beispielsweise kann im Rahmen der Nachrüstung ein gesamter nicht-schwenkbarer Streuer oder dessen Streuwerk mit einem Zwischenrahmen verbunden werden, welcher ein Bestandteil der Verstelleinrichtung ist. Da die Verstelleinrichtung gleichzeitig die Kuppeleinrichtung umfasst, ist keine weitere Modifikation des Streugeräts notwendig, damit dieses von einem Fahrzeug, wie etwa einem Traktor, getragen werden kann. Die Nachrüstung von Streugeräten mit nicht-schwenkbaren Streuwerken bedingt somit einen vergleichsweise geringen Aufwand, wodurch die Umrüstkosten gering gehalten werden können.

In einer weiteren bevorzugten Ausführungsform des erfindungsgemäßen Streugeräts ist die Verstelleinrichtung mit einem das Streuwerk tragenden Tragrahmen des Streugeräts verbunden. Vorzugsweise ist die Verstelleinrichtung zerstörungsfrei und reversibel lösbar mit dem das Streuwerk tragenden Tragrahmen des Streugeräts verbunden. Das zerstörungsfreie und reversible Lösen der Verstelleinrichtung von dem Tragrahmen erlaubt die Nachrüstung der Verstelleinrichtung, ohne dass diese an den Tragrahmen des Streugeräts angeschweißt werden muss. Somit kann das Streugerät je nach Anwendungsfall mit oder ohne Verstelleinrichtung benutzt werden. Außerdem kann eine Verstelleinrichtung mit unterschiedlichen Streugeräten benutzt werden, wodurch die Anschaffung von mehreren Streugeräten mit schwenkbarem Streuwerk vermieden werden kann.

In einer anderen bevorzugten Ausführungsform des erfindungsgemäßen Streugeräts umfasst die Verstelleinrichtung ein oder mehrere längenveränderliche Einstellelemente. Das eine oder die mehreren längenveränderlichen Einstellelemente können insbesondere Einstellzylinder sein, welche als hydraulische oder pneumatische Einstellzylinder ausgebildet sein können. Insbesondere ist das eine oder sind die mehreren längenveränderlichen Einstellelemente mit einer Betätigungseinrichtung verbunden, wobei die Betätigungseinrichtung beispielsweise ein Fluidsystem oder Pneumatiksystem sein kann. Alternativ kann die Verstelleinrichtung auch ein oder mehrere elektromotorisch angetriebene längenveränderliche Einstellelemente aufweisen.

Die der Erfindung zugrunde liegende Aufgabe wird ferner durch ein Verfahren gemäß Anspruch 12 gelöst, wobei das Verändern des Streubildes des Streugeräts das Verschwenken des Streuwerks umfasst. Hinsichtlich der Vorteile und Modifikationen des erfindungsgemäßen Verfahrens wird zunächst auf die Vorteile und Modifikationen des erfindungsgemäßen Streugeräts verwiesen. Das erfindungsgemäße Verfahren zum Verändern des Streubildes wird mit einem Streugerät nach einer der vorstehend beschriebenen Ausführungsformen ausgeführt.

Das Verändern des Streubildes des Streugeräts kann beispielsweise das Drehen des Streufächers des Streugeräts umfassen. In einer besonders bevorzugten Ausführungsform des erfindungsgemäßen Verfahrens wird eine Kurvenfahrt des Streugeräts oder eines das Streugerät tragenden oder ziehenden Fahrzeugs erfasst und/oder das Streubild des Streugeräts mittels der Verstelleinrichtung in Abhängigkeit der erfassten Kurvenfahrt verändert. Das Erfassen der Kurvenfahrt kann beispielsweise durch das Streugerät selbst oder durch das das Streugerät tragende oder ziehende Fahrzeug erfolgen. Das Verändern des Streubildes des Streugeräts in Abhängigkeit der erfassten Kurvenfahrt kann wiederum von dem erfassten Kurvenradius und/oder der Fahrgeschwindigkeit abhängen.

In einer Weiterbildung des erfindungsgemäßen Verfahrens umfasst das Verändern des Streubildes des Streugeräts mittels der Verstelleinrichtung das Drehen des Streufächers des Streugeräts. Insbesondere erfolgt das Drehen des Streufächers des Streugeräts um eine aufrechte und/oder im Wesentlichen vertikale Schwenkachse. Das Drehen des Streufächers des Streugeräts kann dabei im Uhrzeigersinn und entgegen dem Uhrzeigersinn erfolgen. Auf diese Weise kann das Streubild des Streugeräts sowohl an Linkskurven als auch an Rechtskurven angepasst werden.

Außerdem ist ein erfindungsgemäßes Verfahren vorteilhaft, bei welchem das Verschwenken des Streuwerks über eine Zustandsänderung, insbesondere eine Längenveränderung und/oder eine Positionsänderung, eines Lenkers oder mehrerer Lenker eines das Streugerät tragenden Fahrzeugs erfolgt. Die Verstellung des Streubildes erfolgt somit über eine Verstellung der Mechanik des das Streugerät tragenden Fahrzeugs. Somit können bei dem erfindungsgemäßen Verfahren auch Streugeräte eingesetzt werden, welche selbst keine Verstelleinrichtung zum Schwenken des Streuwerks aufweisen. Insbesondere weist das das Streugerät tragende Fahrzeug zwei Unterlenker auf, wobei zum Verschwenken des Streugeräts samt dessen Streuwerk in eine erste Richtung ein erster Lenker verlängert und/oder ein zweiter Lenker verkürzt wird. Zum Verschwenken des Streugeräts samt dessen Streuwerk in eine zweite Richtung wird der erste Lenker verkürzt und/oder der zweite Lenker verlängert.

Weitere Einzelheiten der Erfindung sind der Figurenbeschreibung und den Zeichnungen zu entnehmen. Dabei zeigen
- Fig. 1: ein Ausführungsbeispiel des erfindungsgemäßen Streugeräts in einer Seitenansicht;
- Fig. 2: das in der Fig. 1 dargestellte Streugerät in einer Draufsicht;
- Fig. 3: das in der Fig. 1 dargestellte Streugerät mit einem verschwenkten Streuwerk in einer Draufsicht;
- Fig. 4: das in der Fig. 1 dargestellte Streugerät mit einem verschwenkten Streuwerk in einer Seitenansicht;
- Fig. 5: ein Streugerät beim Ausführen des erfindungsgemäßen Verfahrens; und
- Fig. 6: ein weiteres Ausführungsbeispiel des erfindungsgemäßen Streugeräts in einer Seitenansicht.

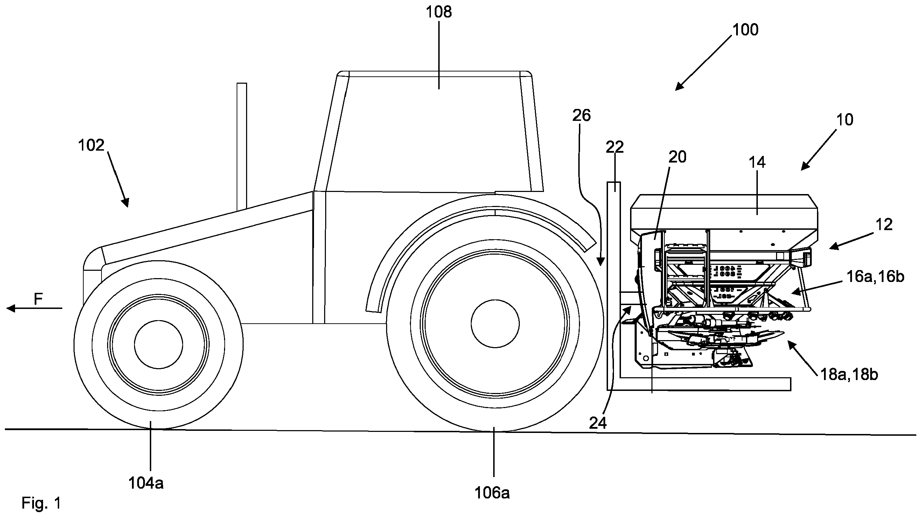

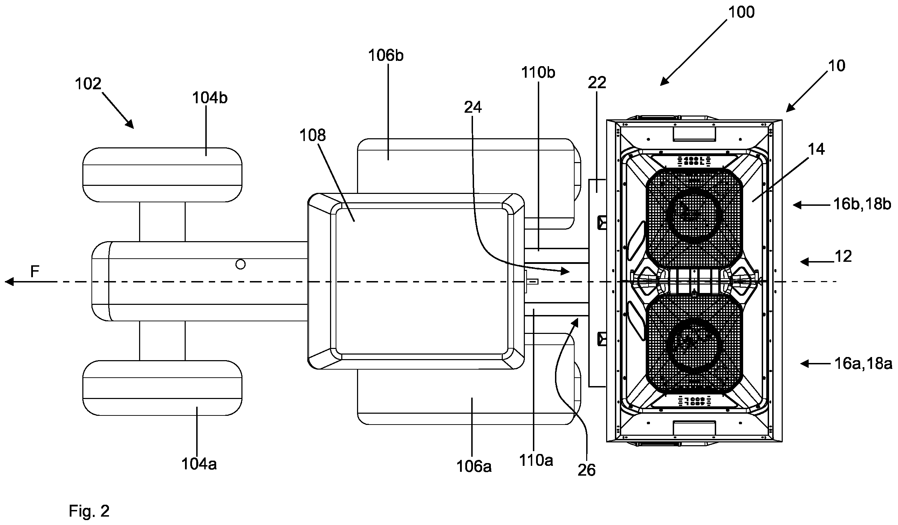

Die Fig. 1 und die Fig. 2 zeigen eine Ausbringkombination 100, welche ein als Düngerstreuer ausgebildetes Streugerät 10 und ein als Traktor ausgebildetes und das Streugerät 10 tragendes Fahrzeug 102 umfasst.

Das Fahrzeug 102 weist eine Vorderachse mit zwei Vorderrädern 104a, 104b und eine Hinterachse mit zwei Hinterrädern 106a, 106b sowie ein Führerhaus 108 auf. In einem hinteren Bereich weist das Fahrzeug 102 eine als Dreipunkt-Kraftheber ausgebildete fahrzeugseitige Kupplungsvorrichtung auf, wobei die fahrzeugseitige Kupplungsvorrichtung zwei nebeneiner angeordnete Unterlenker 110a, 110b und einen zentralen Oberlenker (nicht dargestellt) aufweist.

Das Streugerät 10 ist über eine geräteseitige Kuppeleinrichtung 26 mit der fahrzeugseitigen Kupplungsvorrichtung verbunden. Das Streugerät 10 ist als Anbaustreugerät ausgebildet und weist einen Tragrahmen 20 auf, an welchem ein Streuwerk 12 des Streugeräts 10 befestigt ist. Das Streuwerk 12 umfasst einen Behälter 14, zwei Aufgabeeinrichtungen 16a, 16b und zwei Schleuderscheiben 18a, 18b.

Der Behälter 14 ist ein Vorratsbehälter und dazu eingerichtet, das Streugut zu bevorraten. Der Behälter 14 weist in einem unteren Bereich zwei nebeneinander angeordnete Streukammern auf, wobei das Streugut aus einer ersten Streukammer der Aufgabeeinrichtung 16a und das Streugut aus einer zweiten Streukammer der Aufgabeeinrichtung 16b zugeführt wird. Die Aufgabeeinrichtungen 16a, 16b sind ebenfalls nebeneinander angeordnet und dazu eingerichtet, das Streugut aus dem Behälter 14 auf die Schleuderscheiben 18a, 18b aufzugeben. Die Aufgabeeinrichtungen 16a, 16b sind jeweils als Bestandteil eines Dosierorgans ausgebildet, wobei die Dosierorgane jeweils eine verstellbare Dosieröffnung aufweisen, über welche der Aufgabepunkt des auf die Schleuderscheiben 18a, 18b aufgegebenen Streuguts und die auf die Schleuderscheiben 18a, 18b aufgegebene Streugutmenge einstellbar sind.

Die Schleuderscheiben 18a, 18b werden rotierend angetrieben und sind ebenfalls nebeneinander angeordnet. Die Schleuderscheiben 18a, 18b beschleunigen das aufgegebene Streugut und werfen dies letztendlich auf den Boden aus.

Das Streugerät 10 weist außerdem eine Verstelleinrichtung 24 auf, welche dazu eingerichtet ist, das Streuwerk 12 zur Veränderung des Streubildes des Streugeräts 10 zu verschwenken. Das Verschwenken des Streuwerks 12 erfolgt dabei derart, dass die Relativpostionen des Behälters 14, der Aufgabeeinrichtungen 16a, 16b und der Schleuderscheiben 18a, 18b zueinander unverändert bleiben. Hierzu weist die Verstelleinrichtung 24 einen verstellbaren Zwischenrahmen 22 und die Kuppeleinrichtung 26 auf. Mittels der Verstelleinrichtung 24 ist die Ausrichtung des Zwischenrahmens 22 gegenüber dem Tragrahmen 20 veränderbar, sodass mittels der Verstelleinrichtung 24 auch die Ausrichtung des Streuwerks 12 gegenüber der Kuppeleinrichtung 26 des Streugeräts 10 veränderbar ist. Die Kuppeleinrichtung 26 umfasst drei Kopplungspunkte, wobei die drei Kopplungspunkte der Kuppeleinrichtung 26 des Streugeräts 10 die Verbindungspunkte zu der als Dreipunkt-Kraftheber ausgebildeten Kupplungsvorrichtung des Fahrzeugs 102 darstellen.

Der Zwischenrahmen 22 der Verstelleinrichtung 24 ist zerstörungsfrei und reversibel lösbar mit dem das Streuwerk 12 tragenden Tragrahmen 20 des Streugeräts 10 verbunden. Auf diese Weise kann das Streugerät 10 je nach Bedarf mit oder ohne die den Zwischenrahmen 22 umfassende Verstelleinrichtung 24 verwendet werden. Ferner kann die den Zwischenrahmen 22 umfassende Verstelleinrichtung 24 mit unterschiedlichen Streuwerken 12 oder Streugeräten 10 verwendet werden.

Zum Verschwenken des Streuwerks 12 weist die Verstelleinrichtung 24 eine Steuerungseinrichtung und mehrere längenveränderliche und als hydraulische Einstellzylinder ausgebildete Einstellelemente auf. Die Steuerungseinrichtung ist dazu eingerichtet, die Verstelleinrichtung 24 zum Verschwenken des Streuwerks 12 bei einer Kurvenfahrt des Streugeräts 10 zu betätigen. Die Betätigung erfolgt dabei über eine Längenänderung der Einstellelemente.

Die Verstelleinrichtung 24 kann außerdem dazu eingerichtet sein, das Streuwerk 12 zur Veränderung des Streubildes des Streugeräts 10 seitlich und quer zur Fahrtrichtung F zu verschieben, anzuheben und/oder abzusenken, und/oder in Fahrtrichtung F oder entgegen der Fahrtrichtung F zu verfahren.

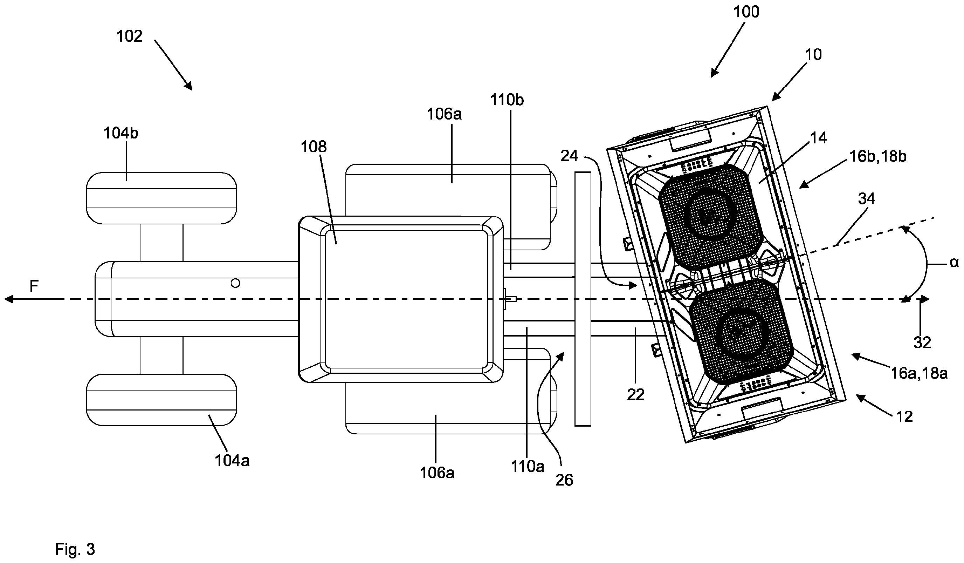

Die Fig. 3 zeigt das zuvor dargestellte Streugerät 10 mit einem seitlich ausgeschwenkten Streuwerk 12. Dieser Zustand kann dadurch erreicht werden, dass die Verstelleinrichtung 24 dazu eingerichtet ist, das Streuwerk 12 um eine aufrechte und im Wesentlichen vertikale Schwenkachse zu verschwenken. Durch das Verschwenken des Streuwerks 12 um die aufrechte und im Wesentlichen vertikale Schwenkachse kann der Schwenkwinkel α eingestellt werden, wobei der Schwenkwinkel α dem Winkel zwischen der Längsachse 32 des Zwischenrahmens 22 der Verstelleinrichtung 24 und der Längsachse 34 des Streuwerks 12 in einer horizontalen Ebene entspricht. Die Verstelleinrichtung 24 erlaubt ferner das Verschwenken des Streuwerks 12 in die entgegengesetzte Richtung. Die Verstelleinrichtung 24 kann dazu eingerichtet sein, den Schwenkwinkel α stufenweise oder stufenlos einzustellen.

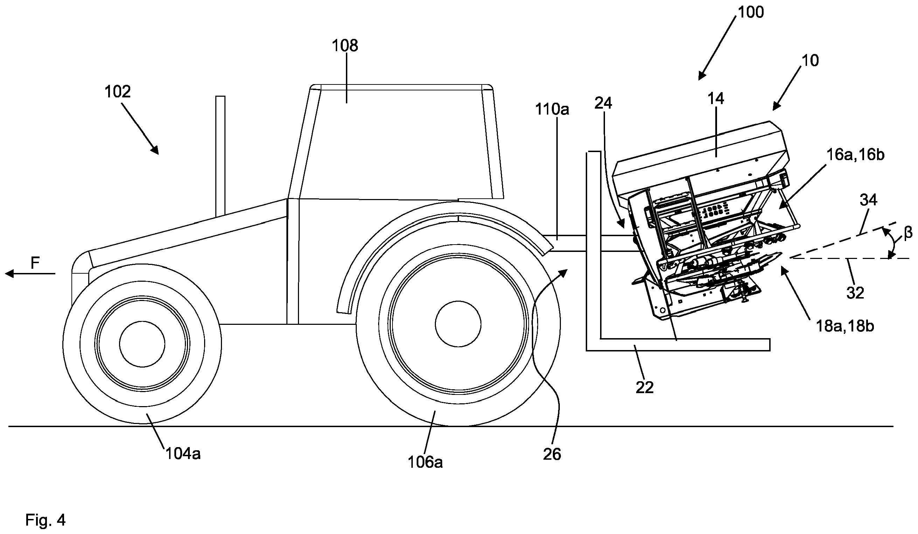

Die Fig. 4 zeigt das zuvor dargestellte Streugerät 10 mit einem nach oben ausgeschwenkten Streuwerk 12. Dieser Zustand kann dadurch erreicht werden, dass die Verstelleinrichtung 24 dazu eingerichtet ist, das Streuwerk 12 um eine im Wesentlichen horizontale und quer zur Fahrtrichtung F verlaufende Schwenkachse zu verschwenken. Durch das Verschwenken des Streuwerks 12 um eine im Wesentlichen horizontale und quer zur Fahrtrichtung F verlaufende Schwenkachse kann der Schwenkwinkel β eingestellt werden, wobei der Schwenkwinkel β dem Winkel zwischen der Längsachse 32 des Zwischenrahmens 22 der Verstelleinrichtung 24 und der Längsachse 34 des Streuwerks 12 in einer vertikalen Ebene entspricht. Die Verstelleinrichtung 24 erlaubt ferner das Verschwenken des Streuwerks 12 auch nach unten. Die Verstelleinrichtung 24 kann dazu eingerichtet sein, den Schwenkwinkel β stufenweise oder stufenlos einzustellen.

Ferner kann das Streugerät 10 die in der Fig. 3 und in der Fig. 4 dargestellten Streuwerkverschwenkungen auch kombinieren, sodass das Streuwerk 12 gleichzeitig oder nacheinander um eine aufrechte und im Wesentlichen vertikale Schwenkachse und eine im Wesentlichen horizontale und quer zur Fahrtrichtung F verlaufende Schwenkachse verschwenkbar ist.

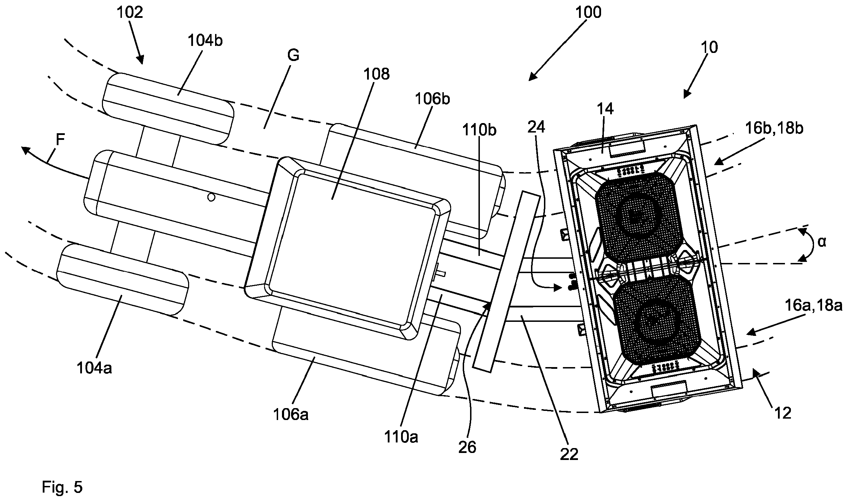

Die Fig. 5 zeigt ein Streugerät 10 mit einem Streuwerk 12, welches wiederum einen Behälter 14 zum Bevorraten des Streuguts, zwei rotierend antreibbare Schleuderscheiben 18a, 18b zum Auswerfen des Streuguts und zwei Aufgabeeinrichtungen 16a, 16b zum Aufgeben des Streuguts auf die Schleuderscheiben 18a, 18b umfasst.

Das Streugerät 10 erfasst die aktuelle Kurvenfahrt und verändert das Streubild des Streugeräts 10 dann in Abhängigkeit des ermittelten Kurvenradius. Die Streubildveränderung erfolgt dabei mittels einer Verstelleinrichtung 24. Die Verstelleinrichtung verändert das Streubild des Streugeräts 10 durch Verschwenken des Streuwerks 12 derart, dass der Streufächer des Streugeräts 10 in die Kurven eingedreht wird.

Folglich umfasst das Verändern des Streubildes des Streugeräts 10 mittels der Verstelleinrichtung 24 das Drehen des Streufächers des Streugeräts 10 um eine aufrechte und im Wesentlichen vertikale Schwenkachse. Der Schwenkvorgang erfolgt dabei derart, dass die Mitte des Streubildes stets im Wesentlichen auf der Mitte einer Fahrgasse G verbleibt.

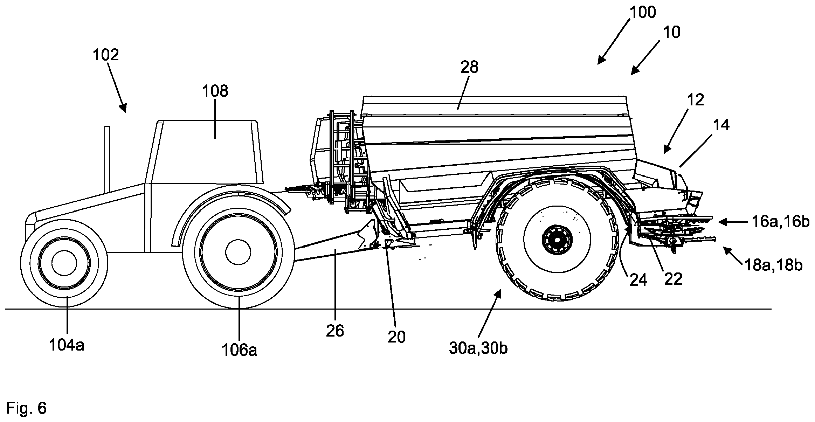

Die Fig. 6 zeigt eine alternative Ausführungsform des Streugeräts 10. Das dargestellte Streugerät 10 ist als Anhängestreuer ausgebildet über eine als Deichsel ausgebildete Kuppeleinrichtung 26 mit einem als Traktor ausgebildeten Fahrzeug 102 verbunden. Das Streugerät 10 ist dazu eingerichtet, von dem Fahrzeug 102 gezogen zu werden. Hierzu weist das Streugerät 10 zwei Räder 30a, 30b auf, über welche das Streugerät 10 gegenüber dem Boden abgestützt wird.

Das Streuwerk 12 ist mit einem Hauptspeicher 28 gekoppelt, wobei in dem Hauptspeicher 28 große Mengen an Streugut mitgeführt werden können. Das Streugut aus dem Hauptspeicher 28 wird zur Ausbringung einem Behälter 14 des Streuwerks 12 zugeführt. Von dem Behälter 14 wird das Streugut über die Aufgabeeinrichtungen 16a, 16b auf die Schleuderscheiben 18a, 18b aufgegeben und von den Schleuderscheiben 18a, 18b ausgeworfen.

Analog zu den in den Fig. 1 bis 5 dargestellten Streugeräten 10 weist auch das in der Fig. 6 dargestellte Streugerät 10 eine Verstelleinrichtung 24 auf, welche dazu eingerichtet ist, das Streuwerk 12 zur Veränderung des Streubildes des Streugeräts 10 seitlich, nach oben und/oder nach unten zu verschwenken.

### Bezugszeichenliste

- 10: Streugerät
- 12: Streuwerk
- 14: Behälter
- 16a, 16b: Aufgabeeinrichtungen
- 18a, 18b: Schleuderscheiben
- 20: Tragrahmen
- 22: Zwischenrahmen
- 24: Verstelleinrichtung
- 26: Kuppeleinrichtung
- 28: Hauptspeicher
- 30a, 30b: Räder
- 32: Längsachse
- 34: Längsachse

- 100: Ausbringkombination
- 102: Fahrzeug
- 104a, 104b: Vorderräder
- 106a, 106b: Hinterräder
- 108: Führerhaus
- 110a, 110b: Unterlenker

- F: Fahrtrichtung
- G: Fahrgasse

- α, β: Schwenkwinkel

## Patentansprüche

1. Streugerät (10) zum Ausbringen von Streugut, insbesondere Düngerstreuer, mit
- einem Streuwerk (12), welches zumindest einen Behälter (14) zum Bevorraten des Streuguts, zumindest eine rotierend antreibbare Schleuderscheibe (18a, 18b) zum Auswerfen des Streuguts und zumindest eine Aufgabeeinrichtung (16a, 16b) zum Aufgeben des Streuguts auf die zumindest eine Schleuderscheibe (18a, 18b) aufweist; und
- einer Verstelleinrichtung (24), mittels welcher das Streubild des Streugeräts (10) veränderbar ist, und die dazu eingerichtet ist, das Streuwerk (12) zur Veränderung des Streubildes des Streugeräts(10) zu verschwenken, **dadurch gekennzeichnet, dass** die Verstelleinrichtung (24) dazu eingerichtet ist, das Streuwerk (12) derart zu verschwenken, dass die Mitte des Streubildes während des Schwenkvorgang im Wesentlichen auf der Mitte einer Fahrgasse (G) verbleibt.

2. Streugerät (10) nach einem der vorstehenden Ansprüche,
**gekennzeichnet durch** eine Steuerungseinrichtung, welche dazu eingerichtet ist, die Verstelleinrichtung (24) zum Verschwenken des Streuwerks (12) bei einer Kurvenfahrt des Streugeräts (10) zu betätigen.

3. Streugerät (10) nach Anspruch 2,
**dadurch gekennzeichnet, dass** die Steuerungseinrichtung dazu eingerichtet ist, den aktuellen Schwenkwinkel des Streuwerks (12) und/oder den am Streuwerk (12) einzustellenden Schwenkwinkel in Abhängigkeit einer gefahrenen Fahrspur zu bestimmen.

4. Streugerät (10) nach Anspruch 2 oder 3,
**dadurch gekennzeichnet, dass** die Steuerungseinrichtung dazu eingerichtet ist, den aktuellen Schwenkwinkel des Streuwerks (12) und/oder den am Streuwerk (12) einzustellenden Schwenkwinkel in Abhängigkeit von Streubildeigenschaften und/oder Geräteeinstellungen des Streugeräts (10) zu berechnen.

5. Streugerät (10) nach einem der vorstehenden Ansprüche,
**dadurch gekennzeichnet, dass** die Verstelleinrichtung (24) derart ausgebildet ist, dass beim Verschwenken des Streuwerks (12) die Relativpostion des zumindest einen Behälters (14), der zumindest einen Schleuderscheibe (18a, 18b) und der zumindest einen Aufgabeeinrichtung (16a, 16b) unverändert bleibt.

6. Streugerät (10) nach einem der vorstehenden Ansprüche,
**dadurch gekennzeichnet, dass** die Verstelleinrichtung (24) dazu eingerichtet ist, das Streuwerk (12) um eine im Wesentlichen horizontale und quer zur Fahrtrichtung (F) verlaufende Schwenkachse zu verschwenken.

7. Streugerät (10) nach einem der vorstehenden Ansprüche,
**dadurch gekennzeichnet, dass** die Verstelleinrichtung (24) dazu eingerichtet ist, das Streuwerk (12) um eine aufrechte und/oder im Wesentlichen vertikale Schwenkachse zu verschwenken.

8. Streugerät (10) nach einem der vorstehenden Ansprüche,
**dadurch gekennzeichnet, dass** die Verstelleinrichtung (24) einen verstellbaren Zwischenrahmen (22) umfasst, mittels welchem die Ausrichtung des Streuwerks (12) gegenüber einem oder mehreren Kopplungspunkten einer Kuppeleinrichtung (26) des Streugeräts (10) veränderbar ist.

9. Streugerät (10) nach Anspruch 8,
**dadurch gekennzeichnet, dass** die Kuppeleinrichtung (26) ein Bestandteil der Verstelleinrichtung (24) ist.

10. Streugerät (10) nach einem der vorstehenden Ansprüche,
**dadurch gekennzeichnet, dass** die Verstelleinrichtung (24), insbesondere zerstörungsfrei und reversibel lösbar, mit einem das Streuwerk (12) tragenden Tragrahmen (20) des Streugeräts (10) verbunden ist.

11. Streugerät (10) nach einem der vorstehenden Ansprüche,
**dadurch gekennzeichnet, dass** die Verstelleinrichtung (24) ein oder mehrere längenveränderliche Einstellelemente, insbesondere Einstellzylinder, umfasst.

12. Verfahren zum Verändern des Streubildes eines Streugeräts (10) nach einem der vorstehenden Ansprüche mit einem Streuwerk (12), welches zumindest einen Behälter (14) zum Bevorraten des Streuguts, zumindest eine rotierend antreibbare Schleuderscheibe (18a, 18b) zum Auswerfen des Streuguts und zumindest eine Aufgabeeinrichtung (16a, 16b) zum Aufgeben des Streuguts auf die zumindest eine Schleuderscheibe (18a, 18b) aufweist, mit dem Schritt:
- Verändern des Streubildes des Streugeräts (10) mittels einer Verstelleinrichtung (24);
wobei das Verändern des Streubildes des Streugeräts (10) das Verschwenken des Streuwerks (12) umfasst.

13. Verfahren nach Anspruch 12,
**gekennzeichnet durch** zumindest einen der Schritte:
- Erfassen einer Kurvenfahrt des Streugeräts (10) oder eines das Streugerät (10) tragenden oder ziehenden Fahrzeugs (102);
- Verändern des Streubildes des Streugeräts (10) mittels der Verstelleinrichtung (24) in Abhängigkeit der erfassten Kurvenfahrt.

14. Verfahren nach Anspruch 12 oder 13,
**dadurch gekennzeichnet, dass** das Verändern des Streubildes des Streugeräts (10) mittels der Verstelleinrichtung (24) das Drehen des Streufächers des Streugeräts (10), insbesondere um eine aufrechte und/oder im Wesentlichen vertikale Schwenkachse, umfasst.

15. Verfahren nach einem der Ansprüche 12 bis 14,
**dadurch gekennzeichnet, dass** das Verschwenken des Streuwerks (12) über eine Zustandsänderung, insbesondere eine Längenveränderung und/oder eine Positionsänderung, eines Lenkers oder mehrerer Lenker eines das Streugerät (10) tragenden Fahrzeugs (102) erfolgt.

## Claims

1. Spreading device (10) for dispensing material to be spread, in particular fertilizer spreader, having
- a spreading unit (12), which has at least one container (14) for storing the material to be spread, at least one centrifugal disc (18a, 18b), able to be driven in rotation, for ejecting the material to be spread, and at least one feeding device (16a, 16b) for feeding the material to be spread onto the at least one centrifugal disc (18a, 18b); and
- an adjusting device (24), by means of which the spreading pattern of the spreading device (10) is able to be altered, and which
is designed to pivot the spreading unit (12) in order to alter the spreading pattern of the spreading device (10), **characterized in that** the adjusting device (24) is designed to pivot the spreading unit (12) in such a way that the middle of the spreading pattern remains substantially at the middle of a tramline (G) during the pivoting operation.

2. Spreading device (10) according to one of the preceding claims,
**characterized by** a control device, which is designed to actuate the adjusting device (24) to pivot the spreading unit (12) when the spreading device (10) negotiates a curve.

3. Spreading device (10) according to Claim 2,
**characterized in that** the control device is designed to determine the current pivot angle of the spreading unit (12) and/or the pivot angle to be set at the spreading unit (12) in dependence on a track travelled along.

4. Spreading device (10) according to Claim 2 or 3,
**characterized in that** the control device is designed to calculate the current pivot angle of the spreading unit (12) and/or the pivot angle to be set at the spreading unit (12) in dependence on spreading-pattern properties and/or device settings of the spreading device (10).

5. Spreading device (10) according to one of the preceding claims,
**characterized in that** the adjusting device (24) is configured such that, when the spreading unit (12) is pivoted, the relative position of the at least one container (14), of the at least one centrifugal disc (18a, 18b) and of the at least one feeding device (16a, 16b) remains unchanged.

6. Spreading device (10) according to one of the preceding claims,
**characterized in that** the adjusting device (24) is designed to pivot the spreading unit (12) about a substantially horizontal pivot axis extending transversely to the direction of travel (F).

7. Spreading device (10) according to one of the preceding claims,
**characterized in that** the adjusting device (24) is designed to pivot the spreading unit (12) about an upright and/or substantially vertical pivot axis.

8. Spreading device (10) according to one of the preceding claims,
**characterized in that** the adjusting device (24) comprises an adjustable intermediate frame (22), by means of which the orientation of the spreading unit (12) with respect to one or more coupling points of a coupling device (26) of the spreading device (10) is able to be altered.

9. Spreading device (10) according to Claim 8,
**characterized in that** the coupling device (26) is a constituent part of the adjusting device (24).

10. Spreading device (10) according to one of the preceding claims,
**characterized in that** the adjusting device (24) is connected, in particular in a non-destructively and reversibly releasable manner, to a support frame (20), carrying the spreading unit (12), of the spreading device (10).

11. Spreading device (10) according to one of the preceding claims,
**characterized in that** the adjusting device (24) comprises one or more variable-length setting elements, in particular setting cylinders.

12. Method for altering the spreading pattern of a spreading device (10) according to one of the preceding claims having a spreading unit (12), which has at least one container (14) for storing the material to be spread, at least one centrifugal disc (18a, 18b), able to be driven in rotation, for ejecting the material to be spread, and at least one feeding device (16a, 16b) for feeding the material to be spread onto the at least one centrifugal disc (18a, 18b),
having the step of:
- altering the spreading pattern of the spreading device (10) by means of an adjusting device (24) ;
wherein the altering of the spreading pattern of the spreading device (10) involves pivoting the spreading unit (12).

13. Method according to Claim 12,
**characterized by** at least one of the steps of:
- detecting negotiation of a curve by the spreading device (10) or of a vehicle (102) carrying or pulling the spreading device (10);
- altering the spreading pattern of the spreading device (10) by means of the adjusting device (24) in dependence on the detected negotiation of a curve.

14. Method according to Claim 12 or 13,
**characterized in that** the altering of the spreading pattern of the spreading device (10) by means of the adjusting device (24) involves turning the spreading fan of the spreading device (10), in particular about an upright and/or substantially vertical pivot axis.

15. Method according to one of Claims 12 to 14,
**characterized in that** the pivoting of the spreading unit (12) is effected via a change of state, in particular a change in length and/or a change in position, of a link or of a plurality of links of a vehicle (102) carrying the spreading device (10).

## Revendications

1. Appareil d'épandage (10) destiné à l'épandage de matériau d'épandage, en particulier des épandeurs d'engrais, ledit appareil d'épandage comprenant
- un mécanisme d'épandage (12) qui comporte au moins un récipient (14) destiné à stocker le matériau d'épandage, au moins un disque centrifuge à entraînement rotatif (18a, 18b) destiné à éjecter le matériau d'épandage et au moins un dispositif d'alimentation (16a, 16b) destiné à alimenter l'au moins un disque centrifuge (18a, 18b) en matériau d'épandage ; et
- un dispositif de réglage (24) qui permet de modifier le motif d'épandage de l'appareil d'épandage (10) et qui est conçu pour faire pivoter le mécanisme d'épandage (12) afin de modifier le motif d'épandage de l'appareil d'épandage (10), **caractérisé en ce que** le dispositif de réglage (24) est conçu pour faire pivoter le mécanisme d'épandage (12) de telle sorte que le centre du motif d'épandage reste sensiblement au centre d'une voie de roulement (G) pendant le processus de pivotement.

2. Appareil d'épandage (10) selon l'une des revendications précédentes, **caractérisé par** un dispositif de commande qui est conçu pour actionner le dispositif de réglage (24) afin de faire pivoter le mécanisme d'épandage (12) lorsque l'appareil d'épandage (10) effectue un virage.

3. Appareil d'épandage (10) selon la revendication 2, **caractérisé en ce que** le dispositif de commande est conçu pour déterminer l'angle de pivotement actuel du mécanisme d'épandage (12) et/ou l'angle de pivotement à régler au niveau du mécanisme d'épandage (12) en fonction d'une voie de roulement parcourue.

4. Appareil d'épandage (10) selon la revendication 2 ou 3, **caractérisé en ce que** le dispositif de commande est conçu pour calculer l'angle de pivotement actuel du mécanisme d'épandage (12) et/ou l'angle de pivotement à régler au niveau du mécanisme d'épandage (12) en fonction des propriétés du motif d'épandage et/ou des réglages de l'appareil d'épandage (10).

5. Appareil d'épandage (10) selon l'une des revendications précédentes, **caractérisé en ce que** le dispositif de réglage (24) est conçu de telle sorte que, lors du pivotement du mécanisme d'épandage (12), les positions relatives de l'au moins un récipient (14), de l'au moins un disque centrifuge (18a, 18b) et de l'au moins un dispositif d'alimentation (16a, 16b) restent inchangées.

6. Appareil d'épandage (10) selon l'une des revendications précédentes, **caractérisé en ce que** le dispositif de réglage (24) est conçu pour faire pivoter le mécanisme d'épandage (12) sur un axe de pivotement sensiblement horizontal et transversal au sens de déplacement (F).

7. Appareil d'épandage (10) selon l'une des revendications précédentes, **caractérisé en ce que** le dispositif de réglage (24) est conçu pour faire pivoter le mécanisme d'épandage (12) sur un axe de pivotement vertical et/ou sensiblement vertical.

8. Appareil d'épandage (10) selon l'une des revendications précédentes, **caractérisé en ce que** le dispositif de réglage (24) comprend un cadre intermédiaire réglable (22) qui permet de modifier l'orientation du mécanisme d'épandage (12) par rapport à un ou plusieurs points d'attelage d'un dispositif d'attelage (26) de l'appareil d'épandage (10).

9. Appareil d'épandage (10) selon la revendication 8, **caractérisé en ce que** le dispositif d'accouplement (26) fait partie du dispositif de réglage (24).

10. Appareil d'épandage (10) selon l'une des revendications précédentes, **caractérisé en ce que** le dispositif de réglage (24) est relié, en particulier de façon détachable de manière non destructive et réversible, à un cadre support (20) de l'appareil d'épandage (10) qui porte le mécanisme d'épandage (12).

11. Appareil d'épandage (10) selon l'une des revendications précédentes, **caractérisé en ce que** le dispositif de réglage (24) comprend un ou plusieurs éléments de réglage variable en longueur, en particulier des cylindres de réglage.

12. Procédé de modification du motif d'épandage d'un appareil d'épandage (10) selon l'une des revendications précédentes à l'aide d'un mécanisme d'épandage (12) qui comporte au moins un récipient (14) destiné à stocker le matériau d'épandage, au moins un disque centrifuge à entraînement rotatif (18a, 18b) destiné à éjecter le matériau d'épandage et au moins un dispositif d'alimentation (16a, 16b) destiné à alimenter l'au moins un disque centrifuge (18a, 18b) avec le matériau d'épandage,
le procédé comprenant l'étape suivante :
- modifier le motif d'épandage de l'appareil d'épandage (10) au moyen d'un dispositif de réglage (24) ; la modification du motif d'épandage de l'appareil d'épandage (10) comprenant le pivotement du mécanisme d'épandage (12).

13. Procédé selon la revendication 12, **caractérisé par** au moins une des étapes suivantes :
- détecter un virage de l'appareil d'épandage (10) ou d'un véhicule (102) portant ou tirant l'appareil d'épandage (10) ;
- modifier le motif d'épandage de l'appareil d'épandage (10) au moyen du dispositif de réglage (24) en fonction du virage détecté.

14. Procédé selon la revendication 12 ou 13, **caractérisé en ce que** la modification du motif d'épandage de l'appareil d'épandage (10) au moyen du dispositif de réglage (24) comprend la rotation de l'éventail d'épandage de l'appareil d'épandage (10), en particulier sur un axe de pivotement vertical et/ou sensiblement vertical.

15. Procédé selon l'une des revendications 12 à 14, **caractérisé en ce que** le pivotement du mécanisme d'épandage (12) s'effectue par un changement d'état, notamment un changement de longueur et/ou un changement de position, d'un moyen de direction ou de plusieurs moyens de direction d'un véhicule (102) portant l'appareil d'épandage (10).
